# EUROPEAN PATENT APPLICATION

(11) **EP 1 783 768 A2**
(43) Date of publication of application: **09.05.2007**
(21) Application number: 06076923.9
(22) Date of filing: 25.10.2006
(51) Int. Cl.: G11B 20/10, G11B 20/14

(54) **Method and apparatus for detecting saw-tooth wobble signal to reproduce information recorded on an optical disk**

(30) Priority: 03.11.2005 KR 20050104935
(71) Applicant: Samsung Electronics Co., Ltd., Suwon-si, Gyeonggi-Do (KR)
(72) Inventor: Kim, Jin-Han, Yeongtong-Suwon-si Gyeonggi-do (KR); Chekcheyev, Sergey, Yeongtong-gu Suwon-si Gyeonggi-do (KR)
(74) Representative: Hylarides, Paul Jacques

(57) **Abstract**

An apparatus and method for detecting a STW signal to reproduce information recorded on an optical disk is provided. According to the method, a sine component is extracted from an input wobble signal containing a sine component and a cosine component, and the sine component is multiplied by a sine component having the same period as that of the sine component. After that, the multiplied results are accumulated and then a sign of the accumulated results is detected.

## Description

### CROSS-REFERENCE TO RELATED PATENT APPLICATION

This application claims all benefits accruing under 35 U.S.C. §119 from Korean Patent Application No. 2005-104935, filed on November 3, 2005, in the Korean Intellectual Property Office, the disclosure of which is incorporated by reference herein.

### BACKGROUND OF THE INVENTION

### 1. Field of the Invention

The present invention relates to an optical disk, and more particularly, to a method and apparatus for detecting a saw-tooth wobble (STW) signal to reproduce information recorded on an optical disk.

### 2. Related Art

An STW signal is a wobble signal having a saw-tooth shape recorded on an optical disk may be expressed as one of and cos(*at*)+0.25sin(*at*) depending on whether recorded information is "0" or "1". An apparatus for detecting an STW signal is configured to determine whether an input signal is cos(*at*) - 0.25 sin(2*at*) or cos(*at*) + 0.25 sin(*at*) in order to detect digital information recorded using the wobble signal, and detect whether recorded information represents "0" or "1" according to such a determination.

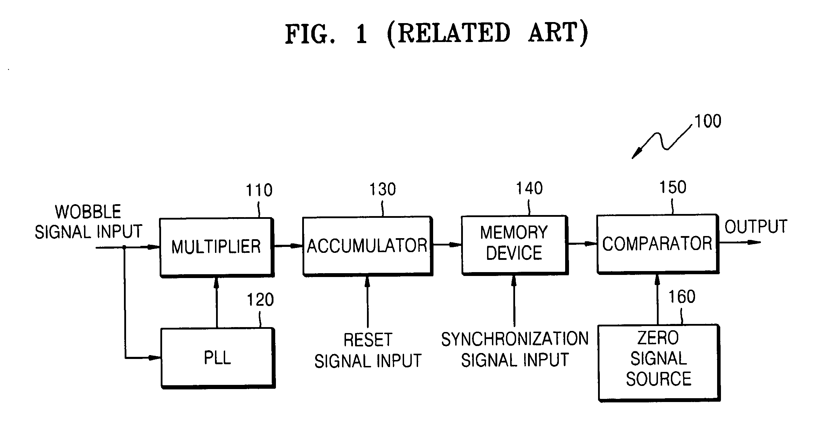

Fig. 1 is a schematic view of an apparatus for detecting a STW signal. Referring to Fig. 1, the apparatus 100 includes a multiplier 110, a phase locked loop (PLL) 120, an accumulator 130, a memory device 140, a comparator 150, and a zero signal source 160.

The PLL 120 selects a carrier of an input wobble signal. The multiplier 110 multiplies an input wobble signal by an output signal from the PLL120. The accumulator 130 accumulates output signals from the multiplier 110. The memory device 140 stores an output signal from the accumulator 130, and the comparator 150 compares an output signal from the memory device 140 with a zero signal from the zero signal source 160.

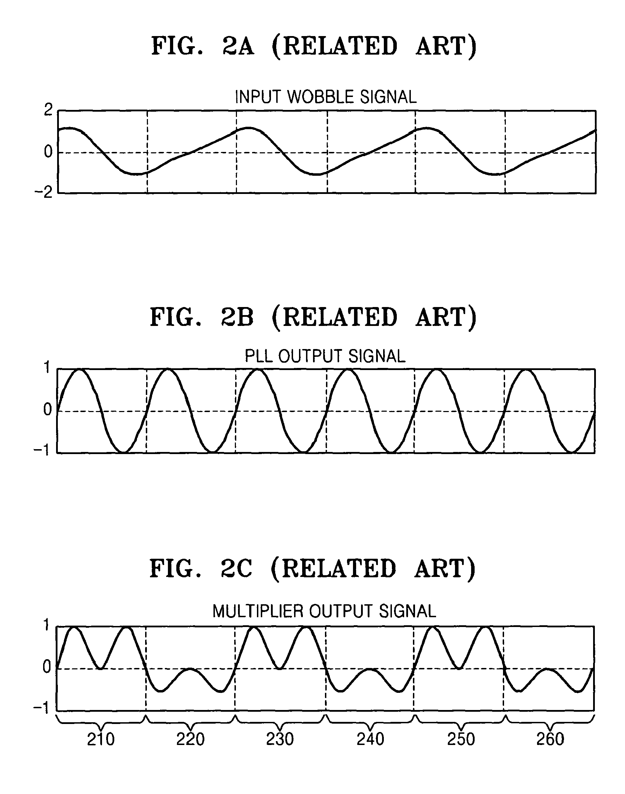

An input signal of the apparatus 100 for detecting the STW signal may be expressed as one of cos(*at*)-0.25sin(2*at*) and cos(*at*)+0.25sin(*at*) depending on whether recorded information represents "0" or "1". When the recorded information is "1", an input signal can be expressed as cos(*at*)+0.25sin(*at*), whose waveform is shown in Fig. 2A. Referring to Fig. 2A, the waveform of information "1" has edges that fall steeply from a region (+) to a region (-), and rise gently from a region (-) to a region (+). When the recorded information is "0", the input signal can be expressed as cos(*at*)-0.25sin(2*at*). In that case, the waveform of information "0" has edges that fall gently from a region (+) to a region (-), and rise steeply from a region (-) to a region (+), unlike the waveform shown in Fig. 2A. The apparatus 100, as shown in Fig. 1, analyzes the waveform of the input signal, in order to detect whether recorded information is "0" or "1".

The frequency of an output signal from the PLL 120 is 2ω. This signal is generated by a controllable oscillator of the PLL 120. An output signal from the controllable oscillator is not ideal because such an output signal contains high-order harmonics.

Assuming that an input signal of the apparatus for detecting the STW signal is cos(*at*)+0.25sin(*at*), a plot of this input signal is shown in Fig. 2A. Also, a plot of an output signal of the PLL is shown in Fig. 2B. A multiplication result of a wobble input signal and an output signal from the PPL 120 is shown in Fig. 2C. An output signal from the multiplier 110, as shown in Fig. 2C, contains a DC component and a selective component. Useful information is contained in the DC component, and the selective component does not have any effective information.

The accumulator 130 accumulates the DC component, and particularly, suppresses a selective component of an input signal. Of course, noises are actually included in all of signals but noise is not shown in Figs. 2A-2C. When signals as shown in Fig. 2C are accumulated, the size of signals is relatively large in regions (+) (e.g., regions 210, 230, and 250) and the size of the signals is relatively small in regions (-) (e.g., regions 220, 240, and 260). Therefore, a (+) result is obtained when theses signals are accumulated. As a result, the apparatus for detecting a STW signal, as shown in Fig. 1, may judge recorded information as "1". However, this is true of an ideal case. In actuality, since output signals from the multiplier 110 contain both a (+) component and a (-) component, an accumulated signal may have a different sign when a signal is twisted a little.

An input reset signal may reset the accumulator 130 at the beginning of each cycle of reading information. The memory device140 stores an output signal of the accumulator 130 at the end of each cycle of reading the information. The stored output signal is then compared with a zero level signal provided from a zero signal source 160 by the comparator 150.

However, an error may occur in an output of the apparatus for detecting a STW signal, as shown in Fig. 1. Such an error depends on a noise level of an input signal and a quality of an output signal from the PLL 120, as shown in Fig. 1. Particularly, existence of PLL signal harmonics together with frequencies 4ω, 6ω, and 8ω generates an additional DC component to an output of the accumulator 130 and finally increases the possibility of an error.

Moreover, known apparatus for detecting a STW signal, as shown in Fig. 1, has additional disadvantages, including being very sensitive to noise included in an input signal and receiving an incompleteness of a PLL output signal. Therefore, the input noise and the incompleteness of the PLL output signal increase the possibility that recorded information can be falsely detected.

### SUMMARY OF THE INVENTION

Several aspects and example embodiments of the present invention provide an apparatus and method for detecting a STW signal in a system for reproducing information recorded on an optical disk, while guaranteeing reduction of an error possibility.

Additional aspects and/or advantages of the invention will be set forth in part in the description which follows and, in part, will be obvious from the description, or may be learned by practice of the invention.

In accordance with an embodiment of the present invention, a method for detecting a STW signal to reproduce information recorded on an optical disk, comprises: extracting a sine component from an input wobble signal containing a sine component and a cosine component; multiplying the sine component by a sine component having the same period as that of the sine component; accumulating the multiplied results; and detecting a sign of the accumulated results.

According to an aspect of the present invention, the extracting of the sine component may include: removing a DC component from the input wobble signal; and delaying the DC component-removed signal as much as a predetermined degree such that a cosine component is removed from the DC component-removed signal and adding the DC component-removed signal and the delayed signal to extract the sine component.

According to an aspect of the present invention, the multiplying of the sine component may include providing the sine component having the same period as that of the sine component on the basis of a counter synchronized by passing the input wobble signal through a phase locked loop (PLL).

In accordance with another embodiment of the present invention, an apparatus for detecting a STW signal to reproduce information recorded on an optical disk, comprises: a sine component extracting unit for extracting a sine component from an input wobble signal containing a sine component and a cosine component; a sine component multiplication unit for multiplying the sine component by a sine component having the same period as that of the sine component; an accumulator for accumulating the multiplied results; and a sign detector for detecting the sign of the accumulated results.

According to an aspect of the present invention, the sine component extracting unit may include: a subtracter for subtracting an input wobble signal-accumulated signal from the input wobble signal in order to remove a DC component of the input wobble signal; a delayer for delaying the DC component-removed signal as much as a predetermined degree such that a cosine component is removed from the DC component-removed signal outputted from the subtracter; and an adder for adding the DC component-removed signal from the subtracter and the delayed signal from the delayer to extract the sine component.

According to an aspect of the present invention, the sine component multiplication unit may include: a phase locked loop (PLL) for receiving the input wobble signal; a counter for receiving a signal from the PLL to perform synchronization; and a sine component memory for providing the sine component having the same period as that of the sine component on the basis of counting by the counter.

In addition to the example embodiments and aspects as described above, further aspects and embodiments of the present invention will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
Fig. 1 is a schematic view of a typical apparatus for detecting information carried by a STW signal from an optical disk;
Figs. 2A through 2C are waveform diagrams illustrating signals at different stages of the apparatus for detecting information carried by a STW signal shown in Fig. 1;
Fig. 3 is a schematic view of an apparatus for detecting information carried by a STW signal according to an embodiment of the present invention;
Figs. 4A through 4D are waveform diagrams illustrating signals at different stages of the apparatus for detecting information carried by a STW signal shown in Fig. 3; and
Fig. 5 is a flowchart of a method for detecting information carried by a STW signal according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

As describe above, the apparatus for detecting a STW signal analyzes an input signal and determines the input signal as digital information "0" or "1" depending on whether recorded information is cos(*at*)-0.25sin(2*at*) or cos(*at*)+0.25sin(*at*).

The difference between a signal expressed as cos(*at*)-0.25sin(2*at*) for the recorded information is "0" and a signal expressed as cos(*at*)+0.25sin(*at*) for the recording information is "1" is that a sine component is different. To detect an input STW signal, the present invention removes a cosine component from the input STW signal and extracts only a sine component to analyze the sine component, so as to detect whether the STW signal is "0" or "1".

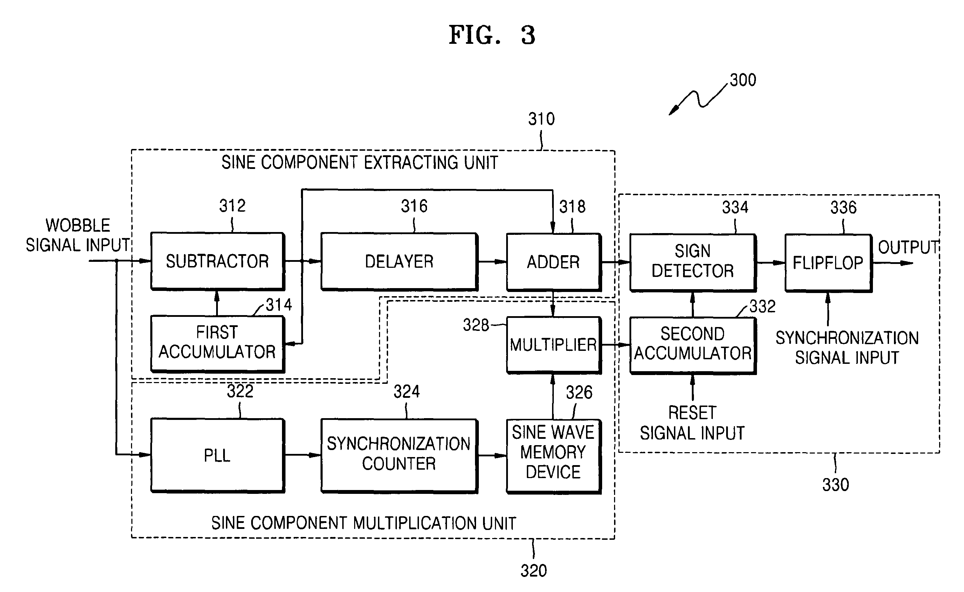

Turning now to Fig. 3, a schematic view of an example apparatus for detecting a STW signal according to an embodiment of the present invention is illustrated. Referring to Fig. 3, the apparatus for detecting a STW signal 300 comprises a sine component extracting unit 310 arranged to remove a cosine component and extract only a sine component from an input wobble signal containing a sine component and a cosine component; a sine component multiplication unit 320 arranged to multiply the sine component extracted from the sine component extracting unit 310 by a sine component having the same period as that of the extracted sine component; and a detection unit 330 arranged to accumulate the multiplied results and detect a sign of the accumulated results.

The sine component extracting unit 310 includes a subtractor 312, a first accumulator 314, a delayer 316, and an adder 318. The subtractor 312 subtracts an output of the first accumulator 314 from an input STW signal, in which the first accumulator 314 selects a DC component of an output signal from the subtracter 312. This way the subtractor 312 can subtract an accumulated signal from the input STW signal so as to remove a DC component from the input STW signal. The delayer 316 is used to shift the phase of an input STW signal from the subtracter 312 such that a cosine component is removed from the DC component-removed signal output from the subtractor 312. The adder 318 is used to add the DC component-removed signal output from the subtractor 312 and the delayed signal from the delayer 316 so as to compensate for first harmonics of the delayed signal from the delayer 316 and extract the sine component from the delayed signal.

The sine component multiplication unit 320 includes a phase locked loop (PLL) 322, a synchronization counter 324, a sine wave memory device 326 and a multiplier 328. The PLL 322 obtains a carrier signal from an input STW signal. The synchronization counter 324 is arranged to receive an output signal from the PLL 322 to perform synchronization. The sine wave memory device 326 provides a sine component having the same period as that of the sine component extracted from the sine component extracting unit 310 on the basis of the synchronization counter 324. The multiplier 328 is arranged to multiply an output signal from the adder 318 of the sine component extracting unit 310 by an output signal from the sine wave memory device 326.

The detection unit 330 includes a second accumulator 332, a sign detector 334 and a D type of flip-flop 336. The second accumulator 332 accumulates output signals from the multiplier 328 of the sine component multiplication unit 320. The sign detector 334 then detects the sign of an output signal from the second accumulator 332, and the D-type of flip-flop 336 stores an output signal from the sign detector 334.

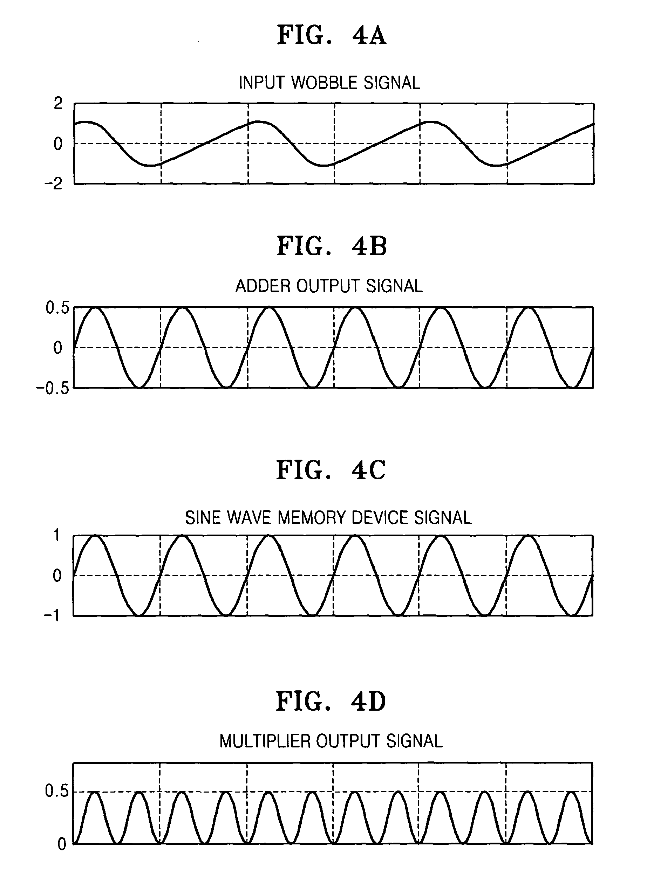

Operation of the apparatus 300 shown in Fig. 3 will now be described with reference to waveforms shown in Figs. 4A-4D herein below.

An input of the apparatus 300 is connected to an input of the subtracter 301.

In an ideal case, the input signal of the apparatus 300 may be expressed as one of cos(*at*)-0.25sin(2*at*) and cos(*at*)+0.25sin(*at*). The waveform according to cos(*at*)+0.25sin(*at*) is shown in Fig. 4A.

However, actually, an input signal of the apparatus 300 may include a low frequency component and may contain a DC component and a noise component. The DC component and the noise component are accumulated at the first accumulator 314, and an output signal from the first accumulator 314 is subtracted from an input STW signal by the subtractor 312. As a result, an output signal from the subtractor 312 does not contain a DC component.

A DC component-removed output signal from the subtractor 312 is provided to an input of the delayer 316. A delay time is π/ω.

When an input signal of the delayer 316 is expressed as: *U*₁= cos(*at*) + 0.25sin(*at*), an output signal of the delayer 316 may be expressed as: *U*₂=cos(*ω(t-* π/ω)) + 0.25sin(2ω(*t* - π/ω))=-cos(*at*) + 0.25sin(2*at*)

Therefore, an output signal of the adder 318 may be expressed as *U*₃ = *U*₁ *+ U*₂ = 0.5sin(2*at*).

A comparison of an input signal and an output signal of the delayer 316 shows that cosine components, i.e., meaningless first harmonics have phases opposite to each other. That is, the cosine component cos(*at*) of U1 and the cosine component - cos(*at*) of U2 cancel each other, so that the cosine component is removed by the adder 318.

The sine components, i.e., second harmonics having information have the same phase. That is, the sine component 0.25sin(2*at*) of U1 and the sine component 0.25sin(2*at*) of U2 are added by the adder 318, so that the amplitude of second harmonics increases twice. An output signal of the adder 318 is illustrated in Fig. 4B.

An input and an output noise of the delayer 316 are added by the adder 318. The phase of a noise is infinite, so an increase of a noise contained in an output from the adder 318 is √2.A resultant improvement of a signal-to-noise (R/N) ratio contained in an output signal from the adder 318 is √2/2 when compared with an output signal of the subtractor 312.

The sine wave memory device 326 is used to generate an ideal symmetric sine wave having a frequency 2ω. A control code for the sine wave memory device 326 is generated by the synchronization counter 324.

An output signal from the PLL 322 is used to synchronize the synchronization counter 324. An output signal of the sine wave memory device 326 is shown in Fig. 4C. That is, the output signal of the sine wave memory device 326 has the same period as that of an output signal of the adder 318, as shown in Fig. 4B, and has an amplitude of 1, as shown in Fig. 4C.

An output signal from the multiplier 328 multiplying an output signal from the adder 318 by a signal from the sine wave memory device 326 is shown in Fig. 4D. As shown in Fig. 4D, the output signal from the multiplier 328 has always a positive value. Therefore, when the output signal from the multiplier 328 is accumulated, a positive value is always outputted. Absence of a negative component in an output signal from the multiplier 328 improves linearity of an output signal from the second accumulator 332. A reset signal is used to reset the second accumulator 332 at the moment when a wobble signal having information starts.

Also, since an input wobble signal is expressed as cos(*at*)+0.25sin(*at*) as shown in Fig. 4A, a resultant output signal from the multiplier changes from 0 to 0.5. However, when an input wobble signal is expressed as cos(*at*)- 0.25sin(*at*), a resultant output signal from the multiplier changes from 0 to -0.5. Therefore, even when an output signal of the multiplier is twisted more or less, an output signal from the multiplier 328 always has a positive value in the case where an input wobble signal is expressed as cos(*at*)+0.25sin(*at*). Also, an output signal from the multiplier 328 always has a negative value in the case where an input wobble signal is expressed as cos(*at*)- 0.25sin(*at*). This fact reduces the possibility that a signal is falsely outputted from positive to negative, or from negative to positive.

The sign detector 324 and the D-type of flip-flop 336 are used for detecting and storing the sign of an output signal from the second accumulator 332 at an ending time of an input wobble signal. The ending time is determined by a synchronization signal when a clock is input by the D-type of flip-flop 336.

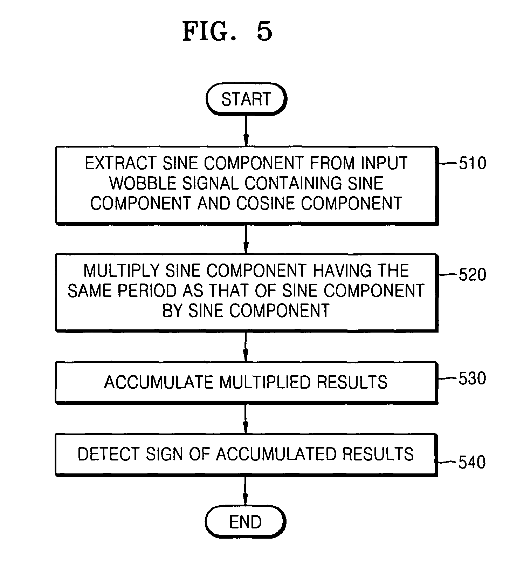

Fig. 5 is a flowchart of a method for detecting a STW signal according to an embodiment of the present invention.

First, a sine component is extracted from an input wobble signal containing a sine component and a cosine component at operation 510.

A sine component having the same period as that of the sine component is multiplied to the sine component at operation 520. After that, signals obtained by the multiplication are accumulated at operation 530.

Next, the sign of the accumulated results is detected at operation 540. When the sign is positive, information of a recorded wobble signal is determined as "1". When the sign is negative, information of a recorded wobble signal is determined as "0".

As described in the foregoing, the present invention advantageously provides a circuit for detecting an accurate shape of a reference sinusoidal signal and improving a signal-to-noise ratio. As a result, better detection accuracy is achieved, and a DC component and a low frequency component of an input signal can be suppressed.

While this invention has been particularly shown and described with reference to exemplary embodiments thereof, it will be understood by those skilled in the art that various changes in form and details may be made therein without departing from the spirit and scope of the invention. For example, elements of the sine component extracting unit 310, the sine component multiplication unit 320 and the detection unit 330, as shown in Fig. 3, can be arranged differently as long as their functionalities are achieved. In addition, the apparatus shown in Fig. 3, can be incorporated as part of a recording apparatus, or alternatively a single apparatus for performing recording and/or reproducing functions with respect to a storage medium. Similarly, the CPU can be implemented as a chipset having firmware, or alternatively, a general or special purposed computer programmed to perform the methods as described, for example, with reference to Fig. 5.
Accordingly, it is intended, therefore, that the present invention not be limited to the various example embodiments disclosed, but that the present invention includes all embodiments falling within the scope of the appended claims.

## Claims

1. A method for detecting a STW (saw-tooth wobble) signal to reproduce information recorded on an optical disk, the method comprising:
extracting a sine component from an input wobble signal containing a sine component and a cosine component;
multiplying the sine component by a sine component having the same period as that of the sine component;
accumulating the multiplied results; and
detecting a sign of the accumulated results.

2. The method as claimed in claim 1, wherein the extracting of the sine component comprises:
removing a DC component from the input wobble signal; delaying the DC component-removed signal by a predetermined degree such that a cosine component is removed from the DC component-removed signal; and
adding the DC component-removed signal and the delayed signal to extract the sine component.

3. The method as claimed in claim 1, wherein the multiplying of the sine component comprises providing the sine component having the same period as that of the sine component on the basis of a counter synchronized by passing the input wobble signal through a phase locked loop (PLL).

4. An apparatus for detecting a STW signal to reproduce information recorded on an optical disk, the apparatus comprising:
a sine component extracting unit arranged to extract a sine component from an input wobble signal containing a sine component and a cosine component;
a sine component multiplication unit arranged to multiply an extracted sine component by a sine component having the same period as that of the extracted sine component;
an accumulator arranged to accumulate the multiplied results; and
a sign detector arranged to detect a sign of the accumulated results representing one of a positive sign and a negative sign.

5. The apparatus as claimed in claim 4, wherein the sine component extracting unit comprises:
a subtractor to subtract an input wobble signal-accumulated signal from the input wobble signal so as to remove a DC component of the input wobble signal;
delayer to delay the DC component-removed signal by a predetermined time such that a cosine component is removed from the DC component-removed signal output from the subtractor; and
an adder to add the DC component-removed signal from the subtractor and the delayed signal from the delayer to extract the sine component.

6. The apparatus as claimed in claim 4, wherein the sine component multiplication unit comprises:
a phase locked loop (PLL) arranged to receive the input wobble signal;
a counter arranged to receive a PLL signal from the PLL to perform synchronization; and
a sine component memory device to provide the sine component having the same period as that of the extracted sine component on the basis of counting by the counter.

7. An apparatus for detecting information carried by an input wobble signal, comprising:
a sine component extracting unit arranged to receive an input wobble signal containing sine and cosine components, and to extract a sine component from the input wobble signal;
a sine component multiplication unit arranged to receive the input wobble signal containing sine and cosine components, and to multiply an extracted sine component by a reference sine component having the same period as that of the extracted sine component; and
a detection unit arranged to accumulate the multiplied results and to detect whether the accumulated results represent one of a positive sign and a negative sign.

8. The apparatus as claimed in claim 7, wherein, when the accumulated results represents a positive sign, the information carried by the input wobble signal represents a logic one ("1"), and when the accumulated results represents a negative sign, the information carried by the input wobble signal represents a logic zero ("0").

9. The apparatus as claimed in claim 8, wherein the sine component extracting unit comprises:
a subtractor arranged to subtract an input wobble signal-accumulated signal from the input wobble signal so as to remove a DC component of the input wobble signal;
a delayer to delay the DC component-removed signal by a predetermined time such that a cosine component is removed from the DC component-removed signal output from the subtractor; and
an adder to add the DC component-removed signal from the subtractor and the delayed signal from the delayer to extract only the sine component from the input wobble signal.

10. The apparatus as claimed in claim 8, wherein the sine component multiplication unit comprises:
a phase locked loop (PLL) arranged to receive the input wobble signal;
a counter arranged to receive a PLL signal from the PLL to perform synchronization;
a sine component memory device to provide the reference sine component having the same period as that of the extracted sine component on the basis of the counter synchronized by passing the input wobble signal through the PLL; and
a multiplier arranged to multiply the extracted sine component with the reference sine component having the same period as that of the extracted sine component.

11. The apparatus as claimed in claim 10, wherein the detection unit comprises:
an accumulator to accumulate an output signal from the multiplier of the sine component multiplication unit;
a sign detector to detect the sign of an output signal from the accumulator; and
a D flip-flop to store an output signal from the sign detector and provide an output in accordance with a synchronization signal.
